# EUROPEAN PATENT APPLICATION

(11) **EP 4 808 155 A1**
(43) Date of publication of application: **16.09.2026**
(21) Application number: 25163396.2
(22) Date of filing: 13.03.2025
(51) Int. Cl.: H04R 25/00, G10L 17/00

(54) **METHOD FOR CUSTOMIZING AUDIO SIGNAL PROCESSING ON A HEARING DEVICE SYSTEM**

(71) Applicant: Sonova AG, 8712 Stäfa (CH)
(72) Inventor: Röck, Hans-Ueli, 8634 Hombrechtikon (CH); Vonlanthen, Andi, 5452 Oberrohrdorf (CH)
(74) Representative: Rau, Schneck & Hübner Patentanwälte Rechtsanwälte PartGmbB

(57) **Abstract**

A method for customizing audio signal processing on a hearing device system (1), a method for customized audio signal processing and a hearing device system are described. The hearing device system (1) comprises or has access to a speaker database (20) comprising a plurality of speaker IDs (21) being associated with respective speakers, wherein a priority parameter (P) is assigned to each speaker ID (21). The hearing device system (1), in particular a hearing device (2) thereof, is configured to detect one or more speech signals (SI) in an audio signal (I), to associate the detected one or more speech signals (SI) with one or more speaker IDs (21) from the speaker database (20) and to provide for a customized audio signal processing of the one or more speech signals (SI) in accordance with the corresponding priority parameter (P) of the associated one or more speaker IDs (21). The method for customizing audio signal processing comprises adjusting the priority parameters (P) in dependence of at least one of the following: a conversation intensity of one or more conversations of a user (U) of the hearing device system (1) with the respective speaker, and a time (UT) and/or location (UL) of the user of the hearing device system (1).

## Description

The disclosed technology generally relates to audio signal processing on a hearing device system. More specifically, the disclosed technology relates to a method for customizing audio signal processing on a hearing device system. The disclosed technology further relates to a method for customized audio signal processing on a hearing device system and to a hearing device system.

Improving intelligibility of speech for a, in particular hearing impaired, user is an important aim of audio signal processing on hearing device systems. Hearing impaired persons have particular challenges to separate and understand speech of other persons, in particular in crowded or loud surroundings. While audibility may be improved by proper amplification, selectivity of different speakers is difficult to achieve. In particular, known speech enhancement routines focus on all kinds of voices, even so only some of the speakers may be relevant to the hearing device user. The situation is even worsened for a hearing-impaired person, who may have difficulties to distinguish different voices and thereby to isolate these voices from other background noises or other speakers.

There have been attempts to mitigate this problem by prioritization of individual speech signals, which, however, requires to learn which speakers and/or voices are relevant for the respective hearing device user. Known methods require cumbersome identification of possible relevant speakers. For example, EP 3 693 960 A1 discloses a detection phase, in which an image of a speaker has to be acquired and compared with a local picture library on an accessory device and/or on social media. This requires intense user interaction, e.g. pointing a smartphone camera to the speaker, leading to discomfort for the speaker and implying data protection risks.

It is an object of the disclosed technology to improve the customization of audio signal processing on a hearing device system, in particular to provide for a simple and reliable prioritization of the speech signals of different speakers.

This object is achieved by a method for customizing audio signal processing on a hearing device system according to claim 1. This object is also achieved by a method for customized audio signal processing according to claim 17 and a hearing device system according to claim 18.

According to the disclosed method for customizing audio signal processing on a hearing device system, the hearing device system comprises or has access to a speaker database comprising a plurality of speaker IDs being associated with respective speakers, wherein a priority parameter is assigned to each speaker ID. The hearing device system, in particular a hearing device thereof, is configured to detect one or more speech signals in an audio signal, to associate the detected one or more speech signals with one or more speaker IDs from the speaker database and to provide for a customized audio signal processing of the one or more speech signals in accordance with the corresponding priority parameter of the associated one or more speaker IDs. The method for customizing the audio signal processing comprises adjusting, in particular by the hearing device system, preferably by the hearing device, the priority parameters in dependence of at least one of the following:
- a conversation intensity of one or more conversations of the user of the hearing device system with the respective speaker, and
- a time and/or location of the user of the hearing device system, in particular during a conversation.

The method allows for an easy and, in particular fully automatic, adjustment of the priority parameters, thereby customizing the audio signal processing on a hearing device system. The priority parameter may reflect the relevance of a speaker for the user, so that the respective speech signals are processed, in particular enhanced, e.g. amplified, in accordance with the relevance of the speaker. For example, relevant speakers, such as nearby relatives, working colleagues, friends and the like, may be associated with a high priority parameter, whereas less relevant speakers, such as casual acquaintances, sales persons or unknown persons talking nearby and the like, may be associated with a lower priority parameter. Advantageously, audio signal processing can be customized to improve intelligibility of speech signals of relevant speakers, in particular speech signals of relevant speakers can be selected from a plurality of speech signals present in an audio signal.

A particular advantage of the disclosed method for customizing audio signal processing is that the data required for adjusting the priority parameters is readily available on hearing device systems, in particular based on data acquired by a hearing device thereof. In particular, adjustment based on the conversation intensity may, in particular exclusively, be based on data retrieved from audio signals obtained by the hearing device system. Additionally or alternatively, the time and/or the location can be easily obtained using the hearing device system, in particular during a conversation of the hearing device user. The method requires neither additional data input nor data access, e.g. for obtaining and comparing images of speakers, nor user interaction for initiating the prioritization and/or adapting the prioritization over time. This improves usability and comfort for the user.

A hearing device in the context of the disclosed technology may, in particular, include hearing aids, headphones, earphones, assistive listening devices, or any combination thereof. The hearing device may include both prescription devices and non-prescription devices configured to be worn on or near a human head. As an example of a hearing device, a hearing aid is a device that provides amplification, attenuation and/or frequency modification of audio signals to compensate for hearing deficiency, hearing difficulty or hearing loss. Some examples of hearing aids include behind-the-ear (BTE) hearing aids, receiver-in-the-canal (RIC) hearing aids, in-the-ear (ITE) hearing aids, completely-in-the-canal (CIC) hearing aids, invisible-in-the-canal (IIC) hearing aids and/or cochlea implants, which may include a device part and an implant part. Particularly preferable, the hearing device of the disclosed technology is a hearing aid, a hearable and/or a hearing implant.

For example, the hearing device comprises an audio input unit for obtaining an input audio signal, a processing unit for processing the input audio signal, thereby obtaining an output audio signal, and an audio output unit for outputting the output audio signal to the user. Preferably, the processing unit may be configured to perform the customized audio signal processing. In particular, the processing unit may be configured to detect speech signals in the input audio signal and to associate the detected speech signals to one or more speaker IDs from the speaker database. It is also possible, that detection and/or association of the speech signals may be, at least in part, be performed by a peripheral device of the hearing device system.

The hearing device may further comprise a battery for providing electrical power to the hearing device and its components. The battery can be a rechargeable battery and/or a non-rechargeable battery.

In the sense of the disclosed technology, an audio signal, in particular the input audio signal and the output audio signal, may be any electrical signal, which carries acoustic information. For example, the input audio signal may be raw audio data, which is obtained by the audio input unit by receiving a respective ambient sound. The input audio signal may further comprise processed audio data, e.g. compressed audio data and/or a spectrum obtained from the ambient sound. The input audio signal may contain an omni signal and/or a beamformed audio signal.

An audio input unit may comprise one or more electroacoustic transducers, especially in the form of one or more microphones. The audio input unit may receive ambient sound and transform it into an input audio signal. It is also possible that the audio input unit may comprise, in addition to or instead of the one or more transducers, an interface that allows for receiving audio signals, e.g. in the form of an audio stream. For example, an audio stream may be provided to the audio input unit by an external microphone and/or by a peripheral device.

An exemplary audio input unit may further comprise (pre-) processing routines for processing received ambient sounds into an input audio signal. For example, the audio input unit may comprise a beamformer, in particular a binaural beamformer. The audio input unit may comprise pre-processing routines for applying transformations, such as a Fast Fourier Transformation (FFT) and/or a Discrete Cosine Transformation (DCT), window functions, and the like to received audio signals and/or received ambient sound.

The audio output unit may comprise an electroacoustic transducer, in particular in form of a receiver. The audio output unit may provide a corresponding output sound to the hearing device user via the receiver. Furthermore, the audio output unit can comprise, in addition to or instead of the receiver, an interface that allows for outputting electrical audio signals, e.g., in the form of an audio stream or in the form of an electrical signal, that can be used for driving an electrode of a hearing aid implant.

Preferably, the processing unit of one or more hearing devices of the hearing device system may be configured to adjust the priority parameters as described herein. It is also possible that the adjustment of the priority parameters is, at least in parts, realized by a peripheral device of the hearing device system and/or an external device, in particular by a peripheral device of the hearing device system.

The hearing device system may include one or more hearing devices, in particular hearing aids. In particular, the hearing device system may comprise two hearing devices, in particular hearing aids, associated with the left and right ear of the user, respectively. The hearing device system may further comprise one or more peripheral devices, such as a mobile compute device, a smartphone, a smartwatch and/or a wireless microphone. Different devices of the hearing device system may be connectable or connected with each other in data-transmitting and/or data receiving manner, in particular via wireless data connection. Hearing device systems comprising two hearing devices, in particular two hearing aids, may preferably be adapted for binaural audio signal processing.

The hearing device system may be connectable in a data-transmitting and/or data-receiving manner to an external device, which is not part of the hearing device system. An external device may be a local device, e.g. a computing device of the hearing device user (e.g. a laptop, tablet or the like), and/or a remote device, in particular a remote server. Via a remote device, a cloud service may be established. In particular, a plurality of different hearing device systems may be connectable to the remote device, in particular to a remote server.

The speaker database may be comprised by the hearing device system. For example, the speaker database may be stored on a data storage of the hearing device system, in particular of a hearing device and/or a peripheral device of the hearing device system. Preferably, the speaker database may be stored on one or more hearing devices of the hearing device system.

Additionally or alternatively, the speaker database may also be stored on an external device, in particular a remote device, for example on a remote server, to which the hearing device system is connectable in data-transmitting and/or data-receiving manner. The hearing device system, in particular a hearing device thereof, may have access to the speaker database stored on the remote device, in particular via an internet connection.

The speaker database comprises a plurality of speaker IDs. A speaker ID may also be referred to as speaker identification data. A speaker ID may comprise any type of identification data, which is indicative for a specific speaker, in particular for his or her voice and/or speech style, exemplarily including, but not limited to, features such as pitch frequency, formant frequencies, tonality, speech rhythm, talking speed, hoarseness, and dynamic variations and/or statistics of the foregoing features. The speaker ID is indicative for a certain speaker, so that speech signals of the speaker may be associated with the speaker ID. The speaker ID may comprise speech samples, in particular in form of one or more audio files, features obtained from one or more speech samples, an embedding of speech samples in an embedding space, in particular obtained by a neural network, and the like. Preferably, there is one speaker ID per speaker, to which the user has, in particular regular, contact.

The priority parameter may be any kind of data representing a priority. Preferably, the priority parameter may be a discrete or continuous Scalar value, for example a value between 0 and 1.

The speaker database may be configured to store at least 5, in particular at least 50, in particular at least 150, in particular at least 500, in particular at least 1.500, speaker IDs and respective priority parameters. It has been realized that, on average, persons have about 5 particular relevant contacts (e.g. loved ones), 15 good friends, 50 friends, 150 meaningful contacts and 1.500 speakers, which they can recognize. As such, a speaker database with a respectively adapted storage capacity is sufficient for distinguishing and prioritization of speech signals of relevant speakers, preferably of any known speaker, which the user is likely to encounter. In particular, the storage capacity of the speaker database can be chosen so that the speaker database can be implemented, in particular stored, on a hearing device itself, without any relevant limitations with regard the number of speaker IDs storable in the speaker database.

The hearing device system, in particular a hearing device thereof, is configured for detecting one or more speech signals in the audio signal. Detection of speech signals can be done by any known method, for example by blind source separation (BSS), Hidden Markov models, linear predictive coding (LPC) analysis, Gaussian mixture models, machine learning models, in particular based on (deep) neural networks, and/or statistical distance measures. In particular, detection of one or more speech signals may comprise separation of the one or more speech signals from the audio signal, e.g. by blind source separation (BSS) and/or by one or more (deep) neural networks.

The detected, in particular separated, one or more speech signals are associated with one or more speaker IDs from the speaker database. For example, the detected, in particular separated, speech signals may be compared with respective speaker IDs. For example, corresponding features may be derived from the one or more speech signals, which are then compared with features contained in the speaker IDs. It is also possible to calculate a corresponding embedding for the one or more speech signals, which are then compared to existing embeddings in an embedding space associated with the speaker IDs stored in the speaker database.

The hearing device system, in particular a hearing device thereof, is configured to provide customized audio signal processing of the one or more speech signals, which have been detected in, in particular separated from, the audio signal, in accordance with the corresponding priority parameter of the associated one or more speaker IDs.

In particular, audio signal processing may comprise one or more of enhancing, in particular amplifying, one or more speech signals and/or suppressing one or more speech signals, spectral filtering one or more speech signals, adapting the pitch frequency of one or more speech signals and/or translating one or more speech signals into another language.

Customized audio processing may, preferably, comprise enhancing, e.g. amplifying, or attenuating the respective speech signal in accordance with the priority parameter of the associated one or more speaker IDs. For example, a speech signal being associated with a high priority parameter may be amplified, while a speech signal associated with a low priority parameter may be attenuated. In particular, speech signals associated with a priority parameter exceeding a pre-defined threshold may be amplified and speech signals associated with a priority parameter below that threshold may be attenuated. The amount of amplification and/or attenuation may depend on the priority parameter.

Additionally or alternatively, processing routines may be specifically adapted for at least one or more of the speaker IDs, e.g. in form of speaker-specific processing routines and/or speaker specific processing parameters, which may be used to speaker-specifically adapt and/or steer processing routines.

For example, the speaker ID may comprise prosodic information concerning the respective speaker. Prosodic information may be used to adapt filters for audio signal processing of the respective speak signal.

Additionally or alternatively, audio signal processing may comprise processing by machine learning algorithms, in particular neural networks. These algorithms may be adapted, in particular trained, based on speech samples associated with one or more speaker IDs. For example, the weights of a (deep) neural network may be adapted in accordance with the speaker ID, in particular locally in a few layers. For example, the training of the (deep) neural network weights can be enabled and/or strengthened based upon the knowledge of an important speaker currently speaking. The training strength can further be adapted based upon a quality measure of the received speech signal, such as signal-to-noise ratio (SNR) and/or a speech intelligibility index (SII).

Preferably, it is possible to adapt the audio signal processing routines at least for speaker IDs with a high priority parameter, preferably for speaker IDs having a priority parameter exceeding a pre-defined threshold.

Speaker-specific processing routines and/or speaker-specific processing parameters, such as adapted weights of a (deep) neural network, may be stored in the speaker database associated with the respective speaker ID.

Detection of speech signals and association with one or more speaker IDs of the speaker database can be executed continuously. It is also possible, that speech signals, which have been associated with one or more speaker IDs can be tracked during the further audio signal processing, in particular for a specific tracking period and/or for the duration of the current conversation of the user. For example, speakers taking part in a conversation can be determined by detecting and associating the respective speech signals with one or more speaker IDs. Based on the associated speaker IDs, the customized audio signal processing of the one or more speakers can be set and applied for the tracking period and/or over the length of the conversation of the user with the respective one or more speakers.

The priority parameter is assigned to the respective speaker ID. For example, the priority parameter, in particular a component thereof, for example a long-term component of the priority parameter, may be stored in the speaker database. Additionally or alternatively, the priority parameter, in particular a component thereof, for example a short-term component of the priority parameter, may be determined upon detection of speech signals being associated with the respective speaker ID.

A time of the user of the hearing device system is in particular a local time at the location of the user, e.g. a daytime and/or a weekday and/or a date.

A location of the user of the hearing device system is in particular a geolo-cation. The location of the user may, for example, be determined via GPS. It is also possible to determine the location based on other kinds of input data, such as detection of known local area networks, such as wireless internet connections. It is also possible that specific sounds of a location are used to determine the location based on audio signals.

Preferably, the time and/or location of the user may be determined during a conversation of the user.

Time and/or location of the user may in particular be used to temporarily alter, in particular increase, the priority parameter of speaker IDs, which are connected with the respective time and/or location. For example, the location may be associated with a specific place, such as the working place and/or the home of the user. For example, speaker IDs being associated with working colleagues of the user may be increased during business hours and/or when the user is at or near the location of his or her working place. For example, it is possible to increase the priority parameters, which may be associated with speaker IDs of salespersons and/or bartenders, when the user enters a supermarket and/or a café. For example, respective priority parameters may be increased when the user's smartphone connects to a WLAN of a specific café or restaurant.

Preferably, the hearing device system comprises an own voice ID, characterizing the voice of the user of the hearing device system. The hearing device system may associate an own voice signal in an audio signal with the hearing device user. For example, the own voice ID may be stored in the speaker database.

Particularly preferable, the own voice ID may be used to detect when the user is speaking. This can, for example, be used in detecting conversations of the use of the hearing device with other speakers.

For example, the own voice ID may be trained when setting up the hearing device system. Preferably, it can also be determined, how the user's own voice is to be processed. Some hearing impaired users cannot hear their own voice, so that enhancement of the own voice signal is beneficial. In other cases, when the user still hears his or her own voice well, own voice signals may be filtered, such that the own voice sounds more natural.

According to a preferred aspect of the disclosed technology, adjusting the priority parameters comprises:
- detecting an occurrence of one or more conversations of a user of the hearing device system with a speaker being associated with a speaker ID,
- determining the conversation intensity of the one or more conversations with that speaker, and
- changing the corresponding priority parameter in dependence of the conversation intensity over time.

Changing the priority parameter may in particular include increasing or decreasing the priority parameter.

Preferably, the conversation intensity is monitored over time for one or more conversations with the respective speaker.

Detection of conversation with one or more speakers may in particular include detecting turn-taking of the user speaking, e.g. by detecting an own voice signal, with one or more other speakers speaking, e.g. by detecting speech signals from one or more other speakers. Detection of turn-taking is, generally, sufficient for detecting conversations. For example, speakers, whose speech signals are detected right before or after an own voice signal segment are with a higher probability involved in a conversation with the user than speakers, whose speech signals are not correlated timewise with own voice signal segments. For example, speakers, whose speech signals are spaced apart for a certain period in time, for example for at least thirty seconds or even more than a minute, from own voice signal segments, are less likely to participate in a conversation with the user.

Additionally or alternatively, conversation detection may also include keyword monitoring. Keyword monitoring may refer to verbal or non-verbal utterances of the user and/or a possible one or more conversation partner. For example, keyword monitoring may be indicative of the beginning of a conversation, for example by monitoring keywords like "Hello", "Excuse me" and the like.

Advantageously, keyword monitoring may be combined with detection of turn-taking. For example, non-verbal utterances, (e.g. "Ummh", "Aaah", "Mmmh" and the like) being detected right before or after a turn-taking may be monitored. Additionally or alternatively, responding utterances (e.g. "Yes", "No", "Agree", "I don't think so" and the like) right before or after turn-taking may be monitored.

Conversation detection may include monitoring of a content of conversation. For example, a transcript of speech signals may be obtained and processed. In particular, conversation content monitoring may include monitoring whether terms and relevant phrases as used by either the user and/or one or more other speakers are being reused. For example, terms indicative for a specific topic, which are reused by the user and one or more other speakers, may indicate a conversation.

It is also possible to monitor the conversation content to determine whether the respective speech signals concern a similar or the same topic. One or more (deep) neural networks, preferably a large language model (LLM) may preferably, establish conversation content monitoring.

According to a preferred aspect of the disclosed technology, the conversation intensity is determined based on one or more of the following:
- a duration of one or more conversations with the respective speaker, in particular in a monitoring time period,
- a number of occurrences of conversation with the respective speaker, in particular in a monitoring time period,
- an amount of emotion of the speaker and/or the user, which in particular is determined based on the respective speech signal,
- a conversation content,
- a conversation effort,
- a facing direction of the user relative to the speaker, and/or
- if the speech signals is received via a stream from another device.

In particular, the conversation intensity may be determined based on detecting the duration and/or the number of occurrences of one or more conversations of the user with a speaker associated with a specific speaker ID, in particular within a monitoring time period. For example, longer durations and/or higher numbers of occurrences of conversation, in particular within the monitoring time period, are associated with a higher conversation intensity and lower durations and/or lower numbers of occurrences are associated with a lower conversation intensity. Duration and/or number of occurrences of conversation may refer to the total duration and/or the total number of occurrences of conversations with that respective speaker.

For example, a duration of one or more conversations with the respective speaker may be determined by summing up the duration of the one or more conversations, in particular over a, for example pre-determined, monitoring time period. Additionally or alternatively, it is possible to determine the duration of conversation as an average or any other statistic of durations of multiple conversations.

Preferably, the duration and/or number of occurrences of conversation with that speaker is monitored in a monitoring time period, for example per day, week or month. The monitoring time period may be pre-determined or determined during usage. In particular, the monitoring time period may be variable, in particular variable based on one or more factors of the conversation intensity. The monitoring time period may be the same for different factors of the conversation intensity, in particular the duration and number of occurrences of conversation. It is also possible, that the number of occurrences of conversation is monitored within a first monitoring time period, while the duration of conversation is monitored over another monitoring time period or even continuously, e.g. by monitoring an average of duration of multiple conversations and/or variations thereof.

The amount of emotion of the speaker and/or the user is, preferably, determined based on the respective speech signal. Conversations with high emotional intensity indicate an emotional involvement of the user and/or the other speaker, thereby being indicative of the relevance of the conversation and the respective speaker for the user. For example, the user may have higher emotion in communication with his or her partner than with loose friends. For example, the amount of emotion may be determined based on excitement in the speech signal of the conversation partner and/or in the own voice signal.

Conversation content as part of the conversation intensity may, for example, refer to a classification of the conversation content in different kinds of topics, which may be of more or less relevance to the user. For example, conversation content may be characterized in private, work related and/or everyday topics. It is also possible that topics, which regularly occur in conversations of the user, may be associated with a higher conversation intensity. For example, private topics, such as topics related to hobbies of the user, may be associated with a higher conversation intensity than everyday topics (e.g. ordering coffee in a restaurant).

Conversation effort may in particular relate to the effort of the user to enter into or stay in a conversation with the respective speaker. For example, a higher conversation effort may be determined when the user calls or even tries repetitively to call the other person in order to enter into the conversation. Additionally or alternatively, the conversation effort may be measured by detecting whether the user has to walk to the other person to start a conversation, for example by detecting whether the user is moving, in particular walking, before the conversation with the respective speaker starts. This can, for example, be determined via a motion sensor of the hearing device and/or a peripheral device of the hearing device system.

Conversation effort during conversations may, for example, be measured by the relative speaking time of the user and the one or more other speakers. For example, long speaking segments of the user in respect to short answers by the one or more other speakers may indicate a high conversation effort and vice versa.

Conversation intensity may also be determined based on the fact whether the speech signal is received via a stream from another device. A stream from another device is in particular to be understood as audio data, being received via a data connection from a device and/or source outside of the hearing device, in particular outside of the hearing device system. For example, an audio stream may be received from a mobile phone when the user of the hearing device system takes a phone call. Other examples of audio streams may be podcasts or other audio data, to which the hearing device user intends to listen. Receiving the speech signals via stream is indicative for the intention of the user to understand the speech signals, thereby increasing the respective conversation intensity.

Additionally or alternatively, receipt of the speech signal via audio stream may be indicative for the conversation effort. For example, receipt of the speech signal via stream may be related to a telephone call to or from the **user to** another speaker and, therefore, be related to the effort for entering into conversation with that speaker.

A facing direction of the user may also be referred to as a look direction of the user. For example, it may be determined whether the user looks into the direction of the respective one or more speakers, with which a conversation is determined. In general, looking towards the other speaker is indicative for a higher involvement and/or interest in the conversation and with that in a higher conversation intensity. For example, the facing direction of the user towards another speaker may be detected using the phase relationships of speech signals associated with the respective speaker ID. In particular, the facing direction may be defined as a detected incident angle of such speech signals. For example, an incident angle of at most +/- 60°, in particular of at most +/- 30°, preferably of at most +/- 10°, with regard to the frontal sagittal plane, may be interpreted as the user facing the respective speaker.

Any of the factors of conversation intensity may get weighted differently. For example, a high emotion detected during a conversation might be of higher relevance and thus higher weighted in its contribution to the priority parameter than just the facing direction.

According to a preferred aspect of the disclosed technology, the priority parameters each comprise a long-term component and a short-term component, wherein the long-term component is adjusted over time with a long-term time constant, and wherein the short-term component is adjusted over time with a short-term time constant. The long-term time constant is longer than the short-term time constant, in particular by a factor of at least 10, in particular by a factor of at least 100, in particular by a factor of at least 1.000.

The long-term component and the short-term component may be combined to determine the priority parameter, in particular being indicative of the current relevance of the respective speaker versus other speakers. For example, the long-term component and the short-term component may contribute to the priority parameter, e.g. by being summed up and/or by being mixed. For example, the long-term component and the short-term component may be weighted and/or averaged. It is also possible that a maximum or a minimum of the long-term component and the short-term component may be used as priority parameter.

The long-term component and the short-term component, in particular a sum and/or mixture thereof, may fully determine the priority parameter. It is also possible that further components of the priority parameter may be taken into account.

In particular, adjusting the priority parameter comprises determining one or more components of the priority parameter, in particular the long-term component and/or the short-term component. In particular, adjusting the priority parameter comprises determining the long-term component and the short-term component and combining the long-term component and the short-term component.

The long-term component and the short-term component are adjusted over different timescales. In particular, the change rate of the long-term component is much slower than the change rate of the short-term component. Advantageously, different aspects of the priority parameter can be considered in the long-term component and the short-term component. For example, the long-term component may be indicative for a general importance of the respective speaker to the user. In particular, the long-term component may be indicative of one or more factors of conversation intensity being monitored over the long-term time constant. For example, the long-term component may comprise the number of occurrences and/or the duration of conversations within a, in particular pre-determined, monitoring time period. Additionally or alternatively, the long-term component may comprise the usual locations or time where a conversation with one or several speakers, as associated to their speaker IDs, takes place. The long-term component might for example also get increased during or after a conversation involving a high emotional intensity. The short-term component may be indicative of a current or instant hearing situation of the user, thereby reflecting the current importance of the speaker for the user.

The long-term component and the short-term component may be adjusted based on the same or different aspects of the conversation intensity. For example, it is possible that different aspects of the conversation intensity are monitored for adjusting the long-term component and the short-term component. It is also possible that the same aspects of the conversation intensity are monitored for the long-term component and the short-term component, but on the respective different timescales. For example, when the priority parameter is changed in dependence of the conversation intensity over time, the long-term time constant and/or the short-term time constant may refer to a time in which the determined conversation intensity is taken into account for the changing of the priority parameter.

Preferably, the long-term component is stored in the speaker database. The stored long-term component can be adjusted over time. The stored long-term component may be read from the speaker database, when a detected speech signal is associated with the respective speaker ID.

Preferably, the short-term component may be determined based on the current hearing situation of the user, when a detected speech signal is associated with the respective speaker ID.

According to a preferred aspect of the disclosed technology, the long-term time constant is at least one day, in particular at least one week, preferably at least one month, and/or the short-term time constant is an hour or less, in particular a minute or less, preferably between 1 s and 30 s, for example between 1 s and 10 s.

Preferably, an increase and decrease of the priority parameter, in particular of the long-term component and/or the short-term component, may be executed on different timescales. Particularly preferably, a time constant for decreasing the priority parameter, in particular the long-term component and/or the short-term component, is longer than the time constant for increasing the priority parameter, in particular the long-term component and the short-term component, respectively. For example, individual attack and release times may be defined for the long-term time constant and the short-term time constant, in particular for the short-term time constant. A shorter attack time has the advantage that the priority parameter of a relevant speaker is increased fast, so that the user does not miss important parts of the conversation, for example on the onset of a conversation.

For example, the attack time of the short-term component may be chosen between 1 s and 30 s, preferably between 1 s and 10 s, so that the short-term component may be rapidly increased when a conversation with the respective speaker is detected. On the other hand, the release time of the short-term component may be chosen to be at least 5 minutes, for example between 15 minutes and 1 hour. This way, short interruptions of the conversation do not lead to an immediate decrease of the short-term component which might impair the understanding of the respective speaker when the conversation is resumed.

According to a preferred aspect of the disclosed technology, the short-term components is adjusted based on one or more of the following:
- time and/or location of the user, in particular during a conversation,
- whether the user is currently in a conversation with the respective speaker,
- whether the speech signal is received via a stream from another device,
- a facing direction of the user relative to the speaker, and
- an amount of emotion of the speaker and/or the user, which is in particular determined based on the respective speech signal.

These factors have been shown to be particularly relevant to determine the relevance of a speaker in the current hearing situation, in particular with regard to intelligibility of the speaker in a conversation with the user. For example, adjusting the short-term component may be based on monitoring the respective aspect over the time with the short-term time constant, in particular with an attack time of the short-term time constant.

For example, the short-term component may be set to a base value, for example to 0, expect for cases, in which one or more of the above-factors become relevant, in particular for cases, in which conversation with the respective speaker is detected.

According to a preferred aspect of the disclosed technology, the long-term component is adjusted based on one or more of the following:
- a duration of one or more conversations with the respective speaker, in particular within a monitoring time period,
- a number of occurrences of conversations with the respective speaker, in particular within a monitoring time period, and
- a short-term component, which is determined during one or more conversations with the respective speaker, in particular based on one or more of the following:
   -- a facing direction of the user relative to the speaker,
      - an amount of emotion of the speaker and/or the user, and
   -- if the speech signal is received via stream from another device.

Preferably, the adjustment of the long-term component comprises monitoring one or more of the above factors over time with the long-term time constant.

For example, the long-term component may be increased when a high number of occurrences of conversations, a long duration of conversation and/or a high short-term component during such conversations with the respective speaker is determined, in particular within a, for example pre-determined, monitoring time period. For example, the monitoring time period may correspond to the long-term time constant. It is also possible that the long-term time constant is different, in particular independent, from the monitoring time constant.

Adjusting the long-term component based on the short-term component, in particular based on a facing direction, an amount of emotion and/or if the speech signal is received via stream, allows to, at least indirectly, monitor the respective factors over a longer timescale, in particular with the long-term time constant.

Information on conversation, in particular the duration, number of occurrences and/or the respective short-term component, may be stored, preferably in the speaker database. The stored information may be evaluated to adjust a long-term component from time to time, in particular in periodic time intervals. For example, an analysis of the stored conversation information may be performed after a time period, in particular the monitoring time period, has passed, which corresponds to the long-term time constant. Alternatively or additionally, the stored conversation information is evaluated on a rolling basis over a time period, in particular the monitoring time period, corresponding to the long-term time constant.

According to a preferred aspect of the disclosed technology, the long-term time constant is varied for a speaker ID based on the short-term component, which is determined during one or more conversations with the respective speaker, in particular based on one or more of the following:
- a facing direction of the user relative to the speaker,
- an amount of emotion of the speaker and/or the user, and
- if the speech signal is received via a stream from another device.

Preferably, the long-term time constant, in particular an attack time thereof, may be decreased with increasing short-term component. This allows for increasing the long-term component of speakers, which engage in relevant conversations with the user, e.g. measured by the amount of emotion of the user and/or the speaker, on a shorter timescale. Advantageously, the short-term component can be used to increase the amount and/or the time constant for adjusting the long-term component.

For example, the long-term time constant may be varied between one day and one month, depending on the short-term component, which is detected during conversations with the respective speaker.

In particular, a monitoring time period for monitoring one or more factors of the conversation intensity, in particular the duration and/or number of occurrences of conversation, may be varied together with the long-term time constant. For example, the monitoring time period may be chosen correspondingly to the long-term time constant.

According to a preferred aspect of the disclosed technology, the priority parameter, in particular a long-term component thereof, of a speaker ID is decreased, when the conversation intensity, in particular duration of conversation and/or the number of occurrences of conversation with the respective speaker, is below an intensity threshold over a, for example pre-determined, release time period. Advantageously, the priority parameter, in particular a long-term component thereof, may be decreased, for example for persons, to which the user loses contact.

Preferably, the release time period is much longer than the long-term time constant, in particular longer than a monitoring time period defined by the long-term time constant. This ensures, that a person, to which the user has only rarely and irregularly contact, which may, nevertheless, be important to the user, are not decreased significantly in the priority parameter, in particular in the long-term component thereof. For example, the release time period may be at least one or more weeks, in particular at least one month, in particular at least one or more years.

The release time period may be pre-defined. The release time period may, in particular, be a long-term release time period.

The intensity threshold may, for example, be chosen to be 0. This means that the user does not have any conversation with the respective speaker over the release time period. Of course, also intensity thresholds above 0 are possible, for example reflecting only short and/or sparse conversations.

According to a preferred aspect of the disclosed technology, adjusting the priority parameters comprises:
- detecting an occurrence of one or more conversations of a user of the hearing device system with a speaker being associated with a speaker ID,
- determining a conversation time interval and/or a conversation location, at which locations with that speaker usually take place, and
- increasing the corresponding priority parameter, in particular a short-term component thereof, during the conversation time interval and/or when the user is at or near the conversation location.

Advantageously, the priority parameters can be, in particular fully automatically, adjusted, based on the time and/or location of the user, in particular determined during a conversation of the user. For example, time intervals and/or locations, which are connected with one or more speaker IDs can be learned by the hearing device system. In particular, relevant time intervals and/or locations for the user, for example working hours and/or working places, can be obtained and processed by the hearing device system, without requiring input of further information and/or user interactions.

The conversation time interval may be an average time interval, for example an average daytime and/or an average weekday, on which conversations with the respective speaker take place.

The conversation location may be an average geo-location, for example an average GPS location, which is detected during conversations with the respective speaker. The conversation location, in particular an average GPS location preferably includes some vicinity.

The adjustment based on time and/or location of the user may, in particular, be associated with a short-term component of the priority parameter. It is also possible that the adjustment of the priority parameter based on time and/or location of the user is an independent factor of determining the priority parameter, which may be used to adjust the priority parameter instead of or additionally to other factors, for example a long-term component and a short-term component of the priority parameter.

According to a preferred aspect of the disclosed technology, at least one of the following data associated with a speaker ID is stored in the speaker database:
- duration and/or occurrence of a conversation with the respective speaker,
- the priority parameter, in particular a long-term component thereof,
- a location and/or time, in particular a daytime and/or date and/or weekday, as determined during one or more conversations with the respective speaker, and
- identification data, which is relevant to determine whether a speech signal is associated with the respective speaker ID, wherein the identification data in particular comprises acoustical features and/or parameters being indicative of speech signals of the respective speaker.

This allows for an easy and fast access to and determination of relevant information for the respective speaker ID, in particular the priority parameter, preferably a long-term component thereof. In particular, the long-term component stored in the speaker database allows to store a measure of the general importance of the respective speaker for the user.

Storing the duration and/or occurrence of a conversation with the respective speaker allows to use this data to evaluate the conversation intensity, in particular for adjusting the priority parameter, preferably a long-term component thereof. For example, duration and/or occurrence, in particular a number of occurrences, of conversation with the respective speaker may be monitored over a monitoring time period, in particular a monitoring time period in accordance with the long-term time constant. After the monitoring time period or alternatively in a rolling fashion over the monitoring time period, in particular corresponding to the long-term time constant, the collected data may be evaluated for adjusting the priority parameter, in particular the long-term component thereof.

Storing location and/or time, in particular time of day and/or date, as determined during a conversation with the respective speaker allows for determining a conversation location and/or conversation time associated with that speaker ID. For example, location and/or time of conversations with the speaker may be monitored over time for determining the conversation location and/or conversation time. For example, the conversation time and/or conversation location may be indicative for a usual time and/or location of conversations with that speaker. Preferably, the conversation location and/or conversation time associated with the respective speaker ID may be stored in the speaker database.

Preferably, a short-term component of the priority parameter as determined during one or more conversations with the respective speaker may be stored in a speaker database. In particular, the short-term component as determined in one or more conversations with the respective speaker during a monitoring time period, in particular a time period corresponding to the long-term time constant, may be stored in the speaker database. The stored short-term component may be evaluated to adjust the long-term component of the priority parameter.

The speaker ID may comprise any type of identification data, which is indicative for a specific speaker, in particular for his or her voice and/or speech style. Exemplary acoustical features and/or parameters include, but are not limited to, features such as pitch frequency, formant frequencies, tonality, speech rhythm, talking speed, hoarseness, and dynamic variations and/or statistics of the foregoing features.

According to a preferred aspect of the disclosed technology, the speaker database is organized such that the detected one or more speech signals are compared with stored speaker IDs in decreasing ranking order of the respective priority parameter, in particular the long-term component thereof. Advantageously, speaker IDs associated with speakers of higher relevance for the user are compared sooner with one or more detected speech signals than speaker IDs of speakers having a lower relevance for the user. This way, the association of the one or more speech signals with relevant speakers is particularly fast and reliable.

According to a preferred aspect of the disclosed technology, the speaker database is stored on an external device, in particular on a remote device, preferably in a cloud, and can be retrieved, in particular automatically retrieved, when the hearing device system, in particular a hearing device thereof, is changed, in particular replaced. An update and/or replacement of at least parts of the hearing device system does not interfere with the customized speaker database, in particular the customized priority parameters associated with the speaker IDs. Storing the speaker database on an external device, in particular remote device, prevents data loss and increases flexibility for the hearing device system user.

Preferably, the speaker database may be stored on a remote device, in particular on a remote server, preferably in the cloud, so that data storage is independent of one or more devices of the user.

Particularly preferably, the speaker database is stored on the hearing device system for fast and efficient access to the speaker database during usage. Additionally, the speaker database may be stored on an external device and/or on a remote device, to provide for additional data security and/or data retrieval in the case of data loss on the hearing device system and/or upon changes on the hearing device system and/or replacement of parts thereof.

According to a preferred aspect of the disclosed technology, when a detected speech signal cannot be associated with an existing speaker ID in the speaker database, the hearing device system determines whether the user is in a conversation with the respective speaker, and in that case creates a new speaker ID. Advantageously, the hearing device system allows for an, in particular fully automatic, enrollment of new speaker IDs in the speaker database. An interaction of the user, in particular by selecting and/or creating new speaker IDs, is not required.

Creating a new speaker ID may comprise computing identification data, in particular one or more data samples indicative for the respective speaker. For example, creating a new speaker ID may comprise using computation methods, such as one or more of the following: pitch frequency analysis and/or its variation over time, formant frequency analysis and/or its variation of a time, speech pause duration analysis, audio signal level and/or its variation of a time, linear predictive coding (LPC) analysis, Gaussian mixture models, machine learning, in particular (deep) neural networks, statistical distance measures and/or blind source separation.

The hearing device system, in particular the speaker database, may preferably contain an own voice ID. Preferably, the own voice ID may be obtained and/or trained upon setting up the hearing device. It may comprise computation of the own voice ID in accordance with the above methods for creating a new speaker ID. Additionally and/or alternatively, the own voice ID may be computed and/or determined based on head movements and/or vibrations, for example as detected with an accelerometer in the hearing device of the hearing device system.

In particular, own voice signals may be detected based on head movements and/or vibrations, for example as detected with an accelerometer in the hearing device of the hearing device system.

According to a preferred aspect of the disclosed technology, at least for one or more speaker IDs, speaker-specific processing parameters are stored in the speaker database. Speaker-specific processing parameters may be used for speaker-specifically adapting and/or steering processing routines. In particular, speaker-specific processing parameters may include one or more of weights for a neural network for processing, in particular enhancing, speech signals, filter parameters, spectral and/or dynamic compression parameters, gains, noise cancelling parameters, and speech enhancement parameters. Additionally or alternatively, speaker-specific processing parameters may, for example, comprise prosodic information regarding the speaker, e.g. to fit filters accordingly.

Additionally or alternatively, speaker-specific processing may involve translation of a speaker's voice into another language using an LLM, slowing the speech down, spectral filtering, frequency compression, dynamic compression, isolating the speech from other voices and/or background noises, amplification, attenuation or any other signal processing method or a combination thereof.

Preferably, speaker-specific processing parameters may be stored for speaker IDs with a high priority parameter, in particular with a high long-term component. For example, a high priority parameter may be defined as a priority parameter exceeding a pre-defined threshold. It is also possible to select speaker IDs for speaker-specific processing parameters based on the ranking of the associated priority parameter, in particular a long-term component thereof. For example, speaker-specific processing parameters may be stored to the N speaker IDs, which have the highest priority parameter, in particular a long-term component thereof, wherein N may be a pre-defined and/or a user-selectable number, for example 5, 10, 25 or 50.

Preferably, the audio processing routines for audio signal processing the speech signals may get retrained with voice samples associated with one or more speaker IDs having a high priority parameter.

According to a preferred aspect of the disclosed technology, the hearing device system comprises a user interface, via which the user can at least one of seeing the currently active speaker ID, manually adapting the priority parameter of one or more speaker IDs, in particular one or more currently active speaker IDs, providing a label to one or more speaker IDs, and/or enabling or disabling the speaker enhancement function. Advantageously, the user can, in particular temporarily, prioritize individual speakers. It is also possible that the user may deselect one or more of the speakers, e.g. because he or she is not involved in a conversation with that speaker.

In particular, the user can label one or more speaker IDs with a recognizable term, such as a name and/or a function of the person.

It is also possible that the user may enable and/or disable customized audio signal processing for speech signals associated with one or more speaker IDs. It is also possible that the user may enable or disable the speech enhancement function as a whole.

For example, the user interface may be established via a peripheral device of the hearing device system, for example via a smartphone and/or smartwatch of the user. For example, a hearing device system software or app may be installed on the peripheral device, via which the user may interact with the hearing device system.

The disclosed technology also concerns a method for customized audio signal processing on a hearing device system, wherein the hearing device system comprises or has access to a speaker database comprising a plurality of speaker IDs being associated with respective speakers, wherein a priority parameter is assigned to each speaker ID. The hearing device system, in particular a hearing device thereof, executes the steps: obtaining an input audio signal, detecting one or more speech signals in the input audio signal, associating the detected speech signal with one or more speaker IDs from the speaker database, audio processing the one or more speech signals in dependence of the corresponding priority parameter of the associated one or more speaker IDs to obtain an output audio signal and outputting the obtained output audio signal. The priority parameters are adjusted in accordance with the method described above.

The disclosed technology also relates to a hearing device system comprising at least one hearing device. The hearing device system comprises or has access to a speaker database comprising a plurality of speaker IDs being associated with respective speakers, wherein a priority parameter is assigned to each speaker ID. The hearing device system, in particular the hearing device, is configured to detect one or more speech signals in an input audio signal, to associate the detected one or more speech signals with one or more speaker IDs from the speaker database, and to provide for a customized audio signal processing of the one or more speech signals in accordance with the corresponding priority parameter of the associated one or more speaker IDs. The hearing device system is configured to adjust the priority parameters in accordance with the above-described method.

Further details, features and advantages of the disclosed technology are obtained from the description of exemplary embodiments with reference to the figures, in which:
- Fig. 1: shows a schematic depiction of an exemplary hearing device system comprising two hearing devices,
- Fig. 2: shows a schematic depiction of an exemplary hearing device of the hearing device system of Fig. 1,
- Fig. 3: shows a schematic depiction of a method for customized audio signal processing of speech signals on the hearing device system of Fig. 1, in particular of a hearing device thereof,
- Fig. 4: shows a schematic depiction of a method for adjusting priority parameters of one or more speaker IDs, and
- Fig. 5: shows a schematic depiction of a further embodiment of a method for adjusting priority parameters of one or more speaker IDs.

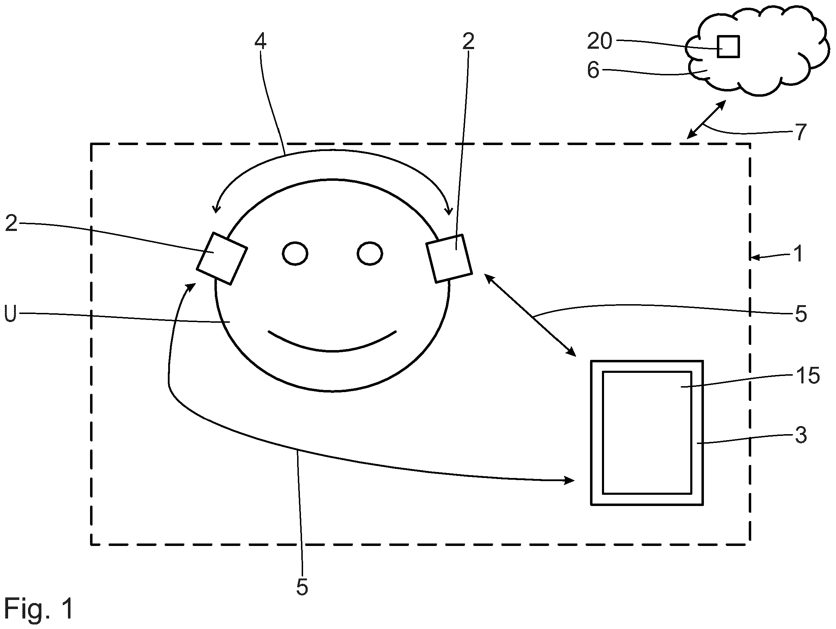

Fig. 1 schematically shows a hearing device system 1 associated with a hearing device user U. The hearing device system 1 comprises two hearing devices 2. The hearing devices 2 are wearable or implantable hearing aids, being associated with the left and right ear of the hearing device user U, respectively.

The hearing device system 1 further comprises a peripheral device 3 being a portable device, e.g. a smartphone, tablet, smartwatch and/or a wireless microphone. In a preferred embodiment, the peripheral device 3 provides a user interface 15, e.g. in form of a touch screen, for adjusting hearing device parameters in an intuitive and user-friendly way. For example, a hearing device software, e.g. in form of a mobile app, may be installed on the peripheral device to allow user interaction with the hearing device system 1 via the user interface 15 of the peripheral device 3.

In other embodiments, exemplary hearing device systems may comprise more or fewer devices. For example, a hearing device system may comprise a single hearing device. In some embodiments, the hearing device system 1 may not comprise a peripheral device, or it may comprise two or more peripheral devices.

The hearing devices 2 are connected to each other in a data-transmitting and/or data-receiving manner via a wireless data connection 4. The wireless data connection may also be referred to as wireless link and may, in particular, be used for binaural audio signal processing. The hearing devices 2 may be further connectable to the peripheral device 3 by wireless data connection 5. Any suitable protocol may be used for establishing the wireless data connections 4, 5. The wireless data connections 4, 5 may be based on the same or different protocols. Exemplary wireless data connections may be by Bluetooth, Bluetooth LE audio or similar protocols, such as, for example, Asha Bluetooth, Bluetooth A2DP, Hands-free profile (HFP), Auracast, Unicast and/or a wireless microphone connection. Further exemplary wireless data connections are DM (digital modulation) transmitters, aptX LL and/or induction transmitters (NFMI). Also other wireless data connection technologies, for example, broadband cellular networks, in particular 5G broadband cellular networks, and /or a local network, in particular a wireless local area network (WLAN,) can be used.

The hearing device system may be connectable to a remote device 6 via a remote data connection 7. The remote device 6 may be a remote server. Via remote device 6, a Cloud service may be established. The remote data connection 7 may preferably be established via the internet, e.g. via WiFi and/or mobile data protocols, such as 3G, 4G and/or 5G broadband cellular networks. The remote data connection 7 may be established between the hearing devices 2 and the remote device 6. Additionally or alternatively, the remote data connection 7 may be established via a peripheral device 3, in particular via a smartphone.

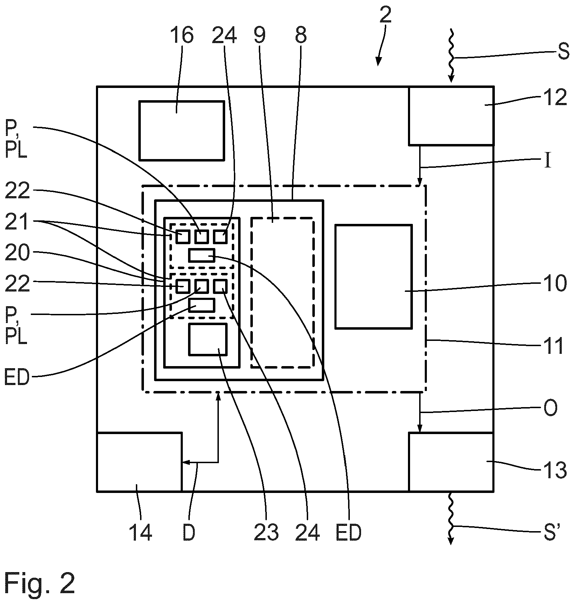

Fig. 2 schematically illustrates a hearing device 2 of the hearing device system 1 in more detail. The hearing device 2 comprises a memory 8 on which hearing device software 9 is stored. Hearing device software 9 comprises instructions to be executed when operating the hearing device. Hearing device 2 further comprises a processor 10, in particular for executing instructions in the hearing device software 9.

The hearing device comprises an audio processing unit 11 for processing audio signals on the hearing device 2. The audio signal processing unit 11 may be seen as a functional unit, which may or may not be associated with specific hardware components. In an embodiment, the memory 8 with the hearing device software 9 and the processor 10 may be part of the audio processing unit 11. For example, the audio signal processing unit 11 may comprise one or more chips, in particular a single chip, comprising the memory 8 and the processor 10. It is also possible that different components may be combined to form the audio processing unit 11.

Processor 10 can be a general purpose processor. Processor 10 can include special-purpose hardware, such as application specific integrated circuits (ASICs), programmable logic devices (PLDs), field-programmable gate arrays (FPGAs), programmable circuitry (e.g. one or more microprocessor microcontrollers), digital signal processor (DSP), appropriately programmed software and/or computer code, or a combination of special purpose hardware and programmable circuitry. In particular, processor 10 may comprise hardware adapted for processing neural networks, e.g. an AI chip.

Any suitable data memory can be used for memory 8. Exemplary data memories include, but are not limited to, dynamic random access memories (DRAM), static random access memories (SRAM), random access memories (RAM), solid state drives (SSD), hard drives and/or flash drives.

The hearing device 2 further comprises an audio input unit 12 to obtain an input audio signal I to be processed by the audio processing unit 11 to obtain an output audio signal O. The hearing device 2 further comprises an audio output unit 13 for outputting the output audio signal O.

An audio signal, in particular the input audio signal I and the output audio signal O, may be any electrical signal which carries acoustic information.

For example, the input audio signal I may be raw audio data, which is obtained by the audio input unit 12 by receiving the respective ambient sound S. The input audio signal I may further comprise processed audio data, e.g. compressed audio data and/or a spectrum obtained from the ambient sound S. The input audio signal I may contain an omni signal and/or a beamformed audio signal.

In the present embodiment, the audio input unit 12 comprises one or more electroacoustic transducers, especially in the form of one or more microphones. The audio input unit 12 receives ambient sound S and provides a corresponding input audio signal I to the audio processing 11. The audio processing unit 11 performs audio signal processing on the respective input audio signal I, thereby obtaining the output audio signal O. The output audio signal O is provided to the output audio unit 13, which outputs the output audio signal O. In the present embodiment, the output audio unit 13 comprises an electroacoustic transducer, in particular in form of a receiver. The audio output unit 13 provides the corresponding output sound S' to the hearing device user U via the receiver.

It has to be noted that in alternative embodiments, the audio input unit 12 may comprise, in addition to or instead of the microphones, an interface that allows for receiving audio signals, e.g., in the form of an audio stream. For example, an audio stream may be provided to the audio input unit 12 by an external microphone and/or by the peripheral device 3. Furthermore, the audio output unit 13 can comprise, in addition to or instead of the receiver, an interface that allows for outputting electrical audio signals, e.g., in the form of an audio stream or in the form of an electrical signal, that can be used for driving an electrode of a hearing aid implant.

An exemplary audio input unit may further comprise (pre-) processing routines for processing the received ambient sounds S into the input audio signal I. For example, the audio input unit 12 may comprise a beamformer, in particular a binaural beamformer. The audio input unit 12 may comprise pre-processing routines for applying transformations, such as a Fast Fourier Transformation (FFT) and/or a Discret Cosine Transformation (DCT), window functions, and the like to the received ambient sound S.

The hearing device 2 may further comprise a data interface 14 for receiving and/or sending data D via the wireless data connections 4, 5. Data interface 14 may, in particular, be used for providing data D, such as processing parameters and the like, to the audio processing unit 11 for steering the audio signal processing.

Hearing device 2 may further comprise a battery 16 for providing electrical power to the hearing device 2 and its components. Battery 16 can be a rechargeable battery and/or a non-rechargeable battery.

The hearing device system 1 comprises a speaker database 20. In the shown embodiment, the speaker database 20 is stored on the memory 8 of hearing device 2. Further, the speaker database 20 may be stored on the remote device 6, in particular on a remote server. This way, the speaker database 20 may be easily synchronized between different devices, in particular different hearing devices 2, of the hearing device system 1. Further, the speaker database 20 can be retrieved upon changes of at least parts of the hearing device system 1, for example when one or more of the hearing devices 2 are replaced.

In other embodiments, it is, additionally or alternatively, possible that the speaker database 20 is stored on the peripheral device 3. It is also possible that the hearing device system 1 does not comprise the speaker database 20, but has access to it, for example via the remote data connection 7.

Speaker database 20 comprises a plurality of speaker IDs 21. In fig. 2 schematically two speaker IDs 21 are depicted. Of course, speaker database can comprise more than two speaker IDs.

Each speaker ID is associated with a specific speaker. Each speaker ID may comprise identification data 22, which is indicative for the respective speaker, in particular for his or her voice and/or speech style, such as tonality, speech rhythm, and the like. Identification data 22 may comprise speech samples, in particular in the form of one or more audio files, features obtained from one or more speech samples, an embedding of speech samples in an embedding space and the like. Identification data 22 may be compared with speech signals and/or features of speech signals and/or embeddings of speech signals in order to associate the speech signals with one or more speaker IDs 21.

For computing a speaker ID 21, in particular identification data 22 thereof, one or more computation methods may be used, including, but not limited to, pitch frequency analysis and/or its variation over time, formant frequency analysis and/or its variation over time, speech pause duration analysis, audio signal level and/or its variation over time, linear predictive coding (LPC) analysis, Gaussian mixture models, machine learning, in particular (deep) neural networks, statistical distance measures and/or blind source separation.

Speaker database 20 also comprises an own voice ID 23, being indicative for the voice of user U. Via own voice ID 23, speech of the user may be detected, for example for determining, whether the user is in a conversation, and/or for customized processing of corresponding own voice signals. Own voice ID 23 may be learned during setting up the hearing device system, for example during hearing device fitting. It is also possible to learn the own voice ID during runtime of the hearing device system. For example, the users own voice may be detected via vibrations and/or head movements, which may be detected with an accelerometer in the hearing device 2.

A respective priority parameter P is assigned to each speaker ID 21. The priority parameter P, in particular one or more components thereof, for example a long-term component PL, are stored in the speaker database 20. In the presently shown embodiment, the long-term component PL of the priority parameter P is stored in the speaker database 20.

Further data may be stored in the speaker database 20, in particular with regard to one or more speaker IDs 21. For example, speaker-specific processing parameters 24 may be stored with regard to one or more of the speaker IDs 21. Speaker-specific processing parameters 24 may, for example, comprise steering parameters for steering the audio signal processing in dependence of the respective speaker ID 21, in particular in dependence of the priority parameter P thereof. For example, speaker-specific processing parameters 24 may comprise filter adaptions for adapting a filter with regard to the respective speaker, for example based on prosodic information on that speaker and/or weights to be applied in at least one or more layers of a (deep) neural network for processing speech signals of that speaker. Speaker-specific processing parameters 24 may, for example, be determined by training the audio signal processing routines, in particular a deep neural network, with speech samples associated with the respective speaker ID 21.

Moreover, the speaker database 20 may comprise evaluation data ED for one or more of the speaker IDs 21. Evaluation data ED may be used in determining and/or adjusting the priority parameter P, in particular the long-term component PL thereof. Evaluation data ED may comprise, but is not limited to, one or more of the following: duration and/or number of occurrences of conversation with the respective speaker, a location and/or time, in particular a daytime and/or date and/or weekday, as determined during a conversation with the respective speaker, and/or a short-term component PS of the priority parameter P as determined during one or more conversations with the respective speaker. Storing evaluation data in the speaker database 20 has the advantage that the evaluation data can be monitored over a longer timescale. For example, the evaluation data may be monitored over a long-term time constant TL, in particular defining a monitoring time period for monitoring one or more factors of the conversation intensity, in particular the duration and/or number of occurrences of conversation. The stored evaluation data may be evaluated from time to time, for example periodically, in particular after expiry of a time period corresponding to the long-term time constant TL, in order to adjust the priority parameter P, in particular a long-term component PL thereof.

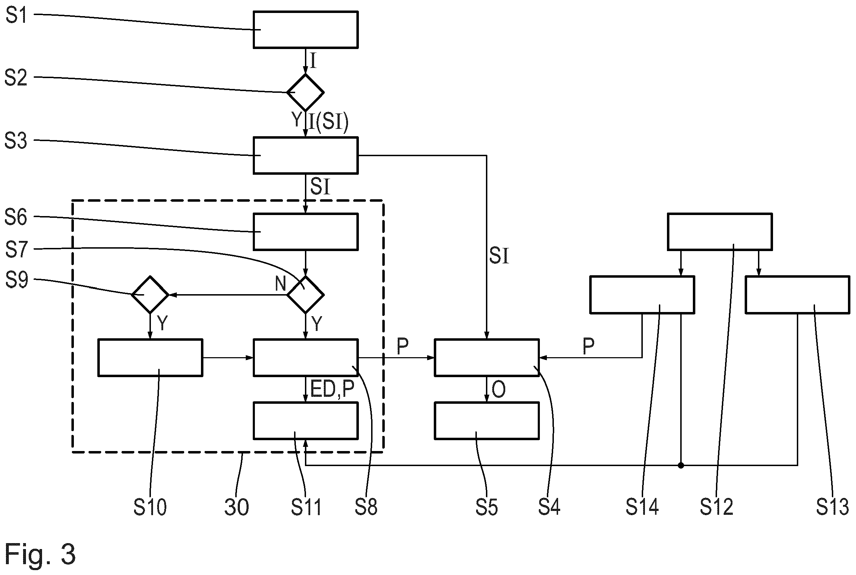

With regard to fig. 3 a method for customized audio signal processing on the hearing device system 1, in particular on one or both of the hearing devices 2, is described. The method shown in fig. 3 is used to provide for a customized audio signal processing of one or more speech signals SI contained in an input audio signal I.

In a step S1 an input audio signal I is obtained, for example by the audio input unit 12 of the hearing device 2. The input audio signal I is, in particular, continuously obtained and monitored with respect to speech signals SI contained in the input audio signal I.

In step S2, it is determined whether one or more speech signals SI are contained in the input audio signal I. If not, the method is terminated and the input audio signal I is processed in another way for obtaining an output audio signal O to be output to the user U. If there is one or more speech signals SI contained in the input audio signal I, the method proceeds to step S3.

In step S3, the one or more speech signals SI in the input audio signal I are detected, in particular separated from the input audio signal I. preferably, the input audio signal I may be split into different audio streams for the respective one or more speech signals SI. For example, step S3 returns the one or more speech signals SI, which may then be separately processed.

In the shown embodiment, detected, in particular separated, speech signals SI are forwarded to a priority parameter determination block 30 for determining a priority parameter P for each of the speech signals SI, as will be described later on.

The detected, in particular separated, one or more speech signals SI are also forwarded to step S4, in which the one or more speech signals SI are processed in dependence of the determined priority parameter P to obtain an output audio signal O.

In step S5, the obtained output audio signal O is output to a user, for example via the audio output unit 13 of the hearing device 2.

In the following, the determination of the priority parameter P to be used in the audio signal processing in step S4 is described.

In step S6, the one or more speech signals SI are analyzed with regard to an identification of the respective speakers. For example, sample identification data, which can be compared with the speaker IDs 21, in particular with the respective identification data 22, is derived from the one or more speech signals SI. For example, sample identification data may be derived via feature extraction, calculation of an embedding and the like.

In step S7, the detected, in particular separated, one or more speech signals SI, in particular sample identification derived therefrom, are compared with speaker IDs 21 of the speaker database 20, in particular with identification data 22 of the speaker IDs 21. It is determined whether the one or more speech signals SI are associated with an existing speaker ID 21.

In case that a speech signal SI is associated with an existing speaker ID 21, the method proceeds to step S8, in which a priority parameter P is obtained for the respective speaker ID 21. Obtaining the priority parameter P includes retrieving the priority parameter P, in particular a long-term component PL, from the speaker database 20, and/or determining a current priority parameter P, in particular a short-term component PS, based on the current hearing situation and/or combining different components of the priority parameter P, in particular the long-term component PL and the short-term component PS.

Preferably, the priority parameter P comprises a long-term component PL, which is stored in and can be retrieved from the speaker database 20. The long-term component PL may be indicative for a general relevance of the corresponding speaker to the user U.

The priority parameter P may further comprise a short-term component PS, which is determined based on the current hearing situation of the user U. The short-term component is indicative for the current relevance of the speaker for the user U as determined based on the current hearing situation.

The long-term component PL and the short-term component PS may be combined to determine the priority parameter P, in particular by summation, mixing and/or weighting the long-term component PL and the short-term component PS. The priority parameter P determines the overall relevance of the respective speaker versus other speakers in the instant hearing situation of the user U.

If it is found in step S7 that a speech signal SI does not correspond to an existing speaker ID 21, the method proceeds to step S9. In step S9, it is determined whether the user U is in a conversation with the speaker associated with the speech signal SI not contained in the speaker database 20. If the user U is not in a conversation with the respective speaker, the speech signal SI of said speaker is not relevant for the user U and may be disregarded or attenuated in the audio signal processing. Further, it is not necessary to create a speaker ID for that speaker.

If it is determined in step S9 that the speaker is in a conversation with the user U, the method proceeds to step S 10. In step S10, the speaker is enrolled in the speaker database 20 by creating a respective speaker ID 21.

After having created a new speaker ID 21, a corresponding priority parameter P can be determined for the respective speech signal SI in step S8. In case of a newly created speaker ID 21, the priority parameter P may, in particular, be determined based on the current hearing situation, for example by determining a short-term component PS thereof. It is also possible to assign a default priority parameter P for the newly created speaker ID 21, for example to assign a default long-term component PL.

Evaluation data ED, which was used in obtaining the priority parameter P in step S8 and/or which has been derived in determining the priority parameter P may be stored to the speaker database in a step S11. For example, evaluation data ED may comprise a time and/or location as determined during the conversation with the respective speaker, a short-term component PS as determined during that conversation and/or a duration and/or an occurrence of conversation with the respective speaker. The evaluation data ED stored in the speaker database 20 can be used to further adjust the priority parameter P, in particular the long-term component PL thereof.

Further, obtaining the priority parameter P in step S8 may comprise updating the long-term component PL. The updated long-term component PL may be stored in the speaker database 20 in step S11.

In step S8, also speaker-specific processing routines and/or speaker-specific processing parameters 24 may be retrieved from the speaker database 20 and used in the audio signal processing in step S4. For example, speaker-specific processing parameters 24 may be used for steering the audio signal processing and/or may be implemented in processing routines for audio signal processing.

The method of customized audio signal processing as shown in fig. 3 can be executed fully automatic on the hearing device system 1, in particular the hearing device 2, without requiring user interaction and/or user input. In particular, creating new speaker IDs 21 and/or obtaining the priority parameter P can be conducted fully automatic. Nevertheless, the disclosed technology foresees the possibility for the user U to interact with the hearing device system 1 and/or to adjust the customized processing. To do so, a user input may be provided in step S12. For example, user input may be provided via a user interface of the hearing device system 1, in particular via user interface 15 of peripheral device 3.

In an example, user U may label one or more speaker IDs 21 in a labeling step S13. For example, the user interface may display to the user U currently active speaker IDs 21 (being speaker IDs 21 which are associated with speech signals presently contained in the input audio signal). The user U may select one or more of the currently active speaker IDs 21 and provide a label thereto, for example a name of the speaker and/or function/group, to which the speaker belongs (for example "Paul (friend)" or "Marie (colleague)"). The provided label may be stored in the speaker database 20, in step S11. The corresponding speaker ID 21 may then be presented with the label to the user via the user interface, in particular when the respective speaker ID is associated with a currently present speech signal SI.

The user U may, in particular temporarily, manually adapt the priority parameter P in a step S14. For example, the user may select one or more of the active speaker IDs 21, which are presented via the user interface, and manually increase or decrease the priority parameter P of the respective speaker ID 21. The manually adapted priority parameter P may be temporarily used in the customized audio signal processing in step S4. Additionally or alternatively, the manually adapted priority parameter P may be stored in the speaker database 20 in step S11, thereby allowing to use the adapted priority parameter P in future conversations with the respective speaker.

Via the user interface, the user U may also activate and/or deactivate the speech enhancement function, either for one or more speaker IDs 21 or for all speaker IDs.

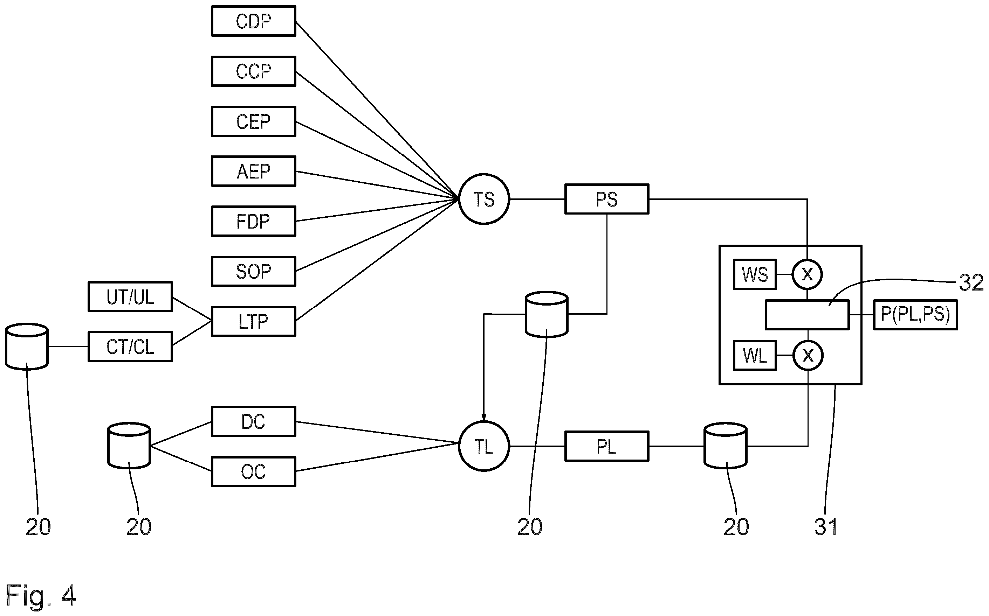

With regard to fig. 4, an exemplary determination and/or adjustment of the priority parameter P, in particular the long-term component PL and the short-term component PS, is described. The method shown in fig. 4 may, for example, be used to obtain the priority parameter P in step S8 of the method of fig. 3.

The short-term component PS is determined by monitoring relevant parameters over a short-term time constant TS. The short-term time constant TS may, for example, be an hour or less, in particular a minute or less, preferably between 1 s and 30 s, for example between 1 s and 10 s.

For determining the short-term component PS, one or more of the following parameters may be monitored:
- a conversation detection parameter CDP, being based on the detection whether the user U is in a conversation with the respective speaker,
- a conversation content parameter CCP, being derived from a conversation content of the conversation of the user U with the respective speaker, e.g. based on a transcript and/or keyword monitoring,
- a conversation effort parameter CEP, being indicative of an effort of the user U to enter into and/or stay in conversation with the respective speaker,
- an amount of emotion parameter AEP, indicating an amount of emotion of the speaker and/or the user U, which is, preferably, determined based on the respective speech signal SI,
- a facing direction parameter FDP, indicating a facing direction of the user U relative to the speaker, in particular whether the user U looks towards the currently active speaker, and
- a signal origin parameter SOP, indicating the origin of the speech signal SI, in particular whether the speech signal SI is received via stream from another device.

Additionally or alternatively to one or more of the above parameters, the short-term component PS may be determined by monitoring a time and/or location of the user U. For example, a time and/or location of the user U as determined during one or more previous conversations with the respective speaker may have been determined and stored in the speaker database 20, for example as part of evaluation data ED in step S11 according to fig. 3.

From the stored time and/or location of one or more previous conversations with the speaker, a conversation time interval CT and/or a conversation location CL, at which conversations with that speaker usually take place, may be determined and stored to the speaker database 20.

In determining the short-term component PS, a user location UL and/or a user time UT may be determined and compared with the conversation time interval CT and/or a conversation location CL retrieved from the speaker database 20. Based on the comparison, a location time parameter LTP may be determined and considered in the short-term component PS. For example, the short-term component PS may be increased, when the user U is during the conversation time interval CT and/or when the user U is at or near the conversation location CL.

The long-term component PL is adjusted based on monitoring a duration of conversation DC and/or a number of occurrences of conversation OC over time with a long-term time constant TL. For example, the duration of one or more conversations and/or the number of occurrences of conversations with the speaker may be stored in the speaker database 20, for example as part of evaluation data ED in step S11 of fig. 3. The duration of conversation DC and/or the number of occurrences of conversation OC may be retrieved from the speaker database 20 and evaluated to determine and/or adjust the long-term component PL.

The long-term component PL may, additionally or alternatively, be determined and/or adjusted by monitoring the short-term component PS over time with the long-term time constant TL. For example, the short-term component PS as determined during one or more conversations with the respective speaker may be stored in the speaker database 20, for example as part of evaluation data ED in step S11 of fig. 3. The stored short-term component PS may be retrieved from the speaker database 20 and evaluated to determine and/or adjust the long-term component PL.

In particular, the long-term component PL may be adjusted in regular time steps, in particular corresponding to the long-term time constant TL and stored in the speaker database 20.

The long-term time constant TS may be at least one day, in particular at least one week, preferably one month or more. It is particularly advantageous, when the long-term time constant TL is speaker-specifically adapted based on the short-term component PS determined in one or more conversations with the respective speaker. In particular, the long-term time constant TL may be decreased for speaker IDs 21, which are associated with high short-term components PS, leading to a faster adaption of the respective long-term component PL. For example, the long-term time constant TL may be adjusted between one day and one month depending on the respective short-term component PS.

During audio signal processing, for example in step S8 of fig. 3, the priority parameter P is obtained. For example, the long-term component PL may be retrieved from the speaker database 20. The short-term component PS may be determined based on the current hearing situation of the user, for example by monitoring the hearing situation over time with the short-term time constant TS.

The long-term component PL and the short-term component PS are combined in a combination process 31. For example, the long-term component PL and the short-term component PS may be mixed, in particular summed-up, averaged and/or weighted.

In the embodiment of fig. 4 the combination process 31 contains weighting the long-term component PL with a respective weighting factor WL. The short-term component PS may be weighted with a weighting factor WS. For example, the weighting factor WS may be 0.6 and the weighting factor WL may be 0.4. Any other combination of weighting factors is possible. The weighting factors WS and WL may be pre-defined or adaptable.

The weighted long-term component PL and the weighted short-term component PS are combined, in particular summed-up and/or averaged in a combination step 32 to obtain the priority parameter P as a function of the long-term component PL and the short-term component PS.

In other embodiments, other combinations of the long-term component PL and the short-term component PS are possible to determine the priority parameter P, for example defining the priority parameter as the maximum or minimum of the long-term component PL and the short-term component PS.

In the example shown in fig. 4, the location and/or time of the user is considered as part of the short-term component PS. It is also possible that the location and/or time of the user may be considered as independent component of the priority parameter P, in particular additionally to the short-term component PS and/or the long-term component PL.

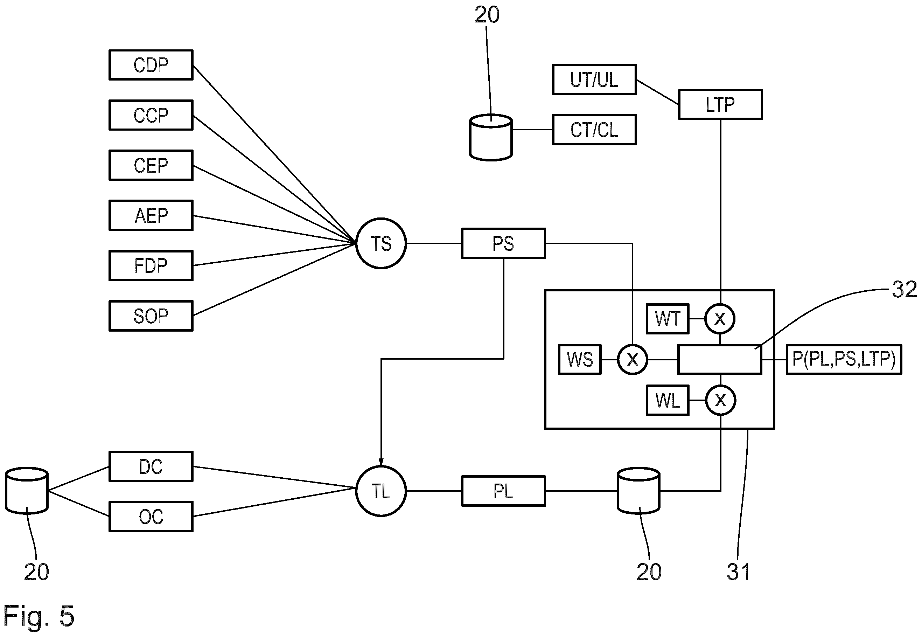

For example, the location time parameter LTP may be an independent component being considered when determining the priority parameter P. This is shown in the embodiment of fig. 5. The location time parameter is determined and combined with the short-term component PS and the long-term component PL in the combination process 31. In the shown embodiment, the location time parameter LTP is weighted with a weighting factor WT and combined with the weighted long-term component PL and the weighted short-term component PS in combination step 32.

## Claims

1. Method for customizing audio signal processing on a hearing device system (1),
- wherein the hearing device system (1) comprises or has access to a speaker database (20) comprising a plurality of speaker IDs (21) being associated with respective speakers, wherein a priority parameter (P) is assigned to each speaker ID (21),
- wherein the hearing device system (1), in particular a hearing device (2) thereof, is configured to detect one or more speech signals (SI) in an audio signal (I), to associate the detected one or more speech signals (SI) with one or more speaker IDs (21) from the speaker database (20) and to provide for a customized audio signal processing of the one or more speech signals (SI) in accordance with the corresponding priority parameter (P) of the associated one or more speaker IDs (21), and
- wherein the method comprises adjusting the priority parameters (P) in dependence of at least one of the following:
-- a conversation intensity of one or more conversations of a user (U) of the hearing device system (1) with the respective speaker, and
-- a time (UT) and/or location (UL) of the user of the hearing device system (1).

2. Method according to claim 1, wherein adjusting the priority parameters (P) comprises:
- detecting an occurrence of one or more conversations of a user (U) of the hearing device system (1) with a speaker being associated with a speaker ID (21),
- determining the conversation intensity of the one or more conversations with that speaker, and
- changing the corresponding priority parameter (P) in dependence of the conversation intensity over time.

3. Method according to claim 1 or 2, wherein the conversation intensity is determined based on one or more of the following:
- a duration of one or more conversations (DC) with the respective speaker, in particular within a monitoring time period,
- a number of occurrences of conversation (OC) with the respective speaker, in particular within a monitoring time period,
- an amount of emotion of the speaker and/or the user (U), which is in particular determined based on the respective speech signal (SI),
- a conversation content,
- a conversation effort,
- a facing direction of the user (U) relative to the speaker, and
- if the speech signal (SI) is received via stream from another device.

4. Method according to any one of the preceding claims, wherein the priority parameters (P) each comprise a long-term component (PL) and a short-term component (PS),
wherein the long-term component (PL) is adjusted over time with a long-term time constant (TL),
wherein the short-term component (PS) is adjusted over time with a short-term time constant (TS), and
wherein the long-term time constant (TL) longer than the short-time constant (TS), in particular by at least 10 times, in particular at least 100 times, in particular at least 1.000 times.

5. Method according to claim 4, wherein the long-term time constant (TL) is at least one day, in particular at least one week, preferably at least one month, and/or the short-term time constant (TS) is an hour or less, in particular a minute or less, preferably between 1 second and 30 seconds, for example between 1 second and 10 seconds.

6. Method according to claim 4 or 5, wherein the short-term component (PS) is adjusted based on one or more of the following:
- time (UT) and/or location (UL) of the user,
- whether the user is currently in a conversation with the respective speaker,
- whether the speech signal (SI) is received via stream from another device,
- a facing direction of the user (U) relative to the speaker, and
- an amount of emotion of the speaker and/or the user (U), which is in particular determined based on the respective speech signal (SI).

7. Method according to any one of claims 4 to 6, wherein the long-term component (PL) is adjusted based on one or more of the following:
- a duration of one or more conversations (DC) with the respective speaker, in particular within a monitoring time period,
- a number of occurrences of conversation (OC) with the respective speaker, in particular within a monitoring time period, and
- the short-term component (PS), which is determined during one or more conversations with the respective speaker, in particular based on one or more of the following:
-- a facing direction of the user (U) relative to the speaker,
-- an amount of emotion of the speaker and/or the user (U), and
-- if the speech signal is received via stream from another device.

8. Method according to any one of claims 4 to 7, wherein the long-term time constant (TL) is varied for a speaker ID (21) based on the short-term component (PS), which is determined during one or more conversations with the respective speaker, in particular based on one or more of the following:
- a facing direction of the user (U) relative to the speaker,
- an amount of emotion of the speaker and/or the user (U), and
- if the speech signal is received via stream from another device.

9. Method according to any one of the preceding claims, wherein the priority parameter (P), in particular a long-term component (PL) thereof, of a speaker ID (21) is decreased, when the conversation intensity, in particular duration of conversation (DC) and/or the number of occurrences of conversation (OC) with the respective speaker, is below an intensity threshold over a release time period.

10. Method according to any one of the preceding claims, wherein adjusting the priority parameters (P) comprises:
- detecting an occurrence of one or more conversations of a user (U) of the hearing device system (1) with a speaker being associated with a speaker ID (21),
- determining a conversation time interval (CT) and/or conversation location (CL), at which conversations with that speaker usually take place, and
- increasing the corresponding priority parameter (P) during the conversation time interval (CT) and/or when the user (U) is at or near the conversation location (CL).

11. Method according to any one of the preceding claims, wherein at least one of the following data associated with a speaker ID (21) is stored in the speaker database (20);
- duration and/or occurrence of a conversation with the respective speaker,
- the priority parameter (P), in particular a long-term component (PL) thereof,
- a location and/or time, in particular a time of day and/or date and/or weekday, as determined during one or more conversations with the respective speaker, and
- identification data (22), which is relevant to determine whether a speech signal is associated with the respective speaker ID (21), wherein the identification data (22) in particular comprises acoustical features and/or parameters being indicative of speech signals (SI) of the respective speaker.

12. Method according to any one of the preceding claims, wherein the speaker database (20) is organized such that detected one or more speech signals (SI) are compared with stored speaker IDs (21) in decreasing ranking order of the respective priority parameter (P), in particular the long-term component (PL) thereof.

13. Method according to any one of the preceding claims, wherein the speaker database (20) is stored on an external device, in particular a remote device (6), preferably in a cloud, and can be retrieved when the hearing device system (1), in particular a hearing device (2) thereof, is changed, in particular replaced.

14. Method according to any one of the preceding claims, wherein, when a detected speech signal (SI) cannot be associated with an existing speaker ID (21) in the speaker database (20), the hearing device system (1) determines whether the user (U) is in a conversation with the respective speaker, and in that case creates a new speaker ID (21).

15. Method according to any one of the preceding claims, wherein at least for one or more speaker IDs (21) speaker-specific processing parameters (24) are stored in the speaker database (20), in particular at least one of speaker-specific weights for a neural network for processing, in particular enhancing, speech signals (SI), filter parameters, spectral and/or dynamic compression parameters, gains, noise cancelling parameters, and speech enhancement parameters.

16. Method according to any one of the preceding claims, wherein the hearing device system (1) comprises a user interface (15), via which the user (U) can at least one of seeing the currently active speaker ID (21), manually adapting the priority parameter (P) of one or more speaker IDs (21), providing a label to one or more speaker IDs (21), and/or enabling/disabling the speaker enhancement function.

17. Method for customized audio signal processing on a hearing device system (1),
- wherein the hearing device system (1) comprises or has access to a speaker database (20) comprising a plurality of speaker IDs (21) being associated to respective speakers, wherein a priority parameter (P) is assigned to each speaker ID (21),
- wherein the hearing device system (1), in particular a hearing device thereof (2), executes the steps:
-- obtaining an input audio signal (I),
-- detecting one or more speech signals (SI) in the input audio signal (I),
-- associating the detected speech signals (SI) with one or more speaker IDs (21) from the speaker database (20),
-- audio processing the one or more speech signals (SI) in dependence of the corresponding priority parameter (P) of the associated one or more speaker IDs (21) to obtain an output audio signal (O), and
-- outputting the obtained output audio signal (O),
- wherein the priority parameters (P) are adjusted in accordance with the method of any one of the preceding claims.

18. Hearing device system (1) comprising a hearing device (2),
- wherein the hearing device system (1) comprises or has access to a speaker database (20) comprising a plurality of speaker IDs (21) being associated to respective speakers, wherein a priority parameter (P) is assigned to each speaker ID (21),
- wherein the hearing device system (1), in particular the hearing device (2), is configured to detect one or more speech signals (SI) in an audio signal (I), to associate the detected one or more speech signals (SI) with one or more speaker IDs (21) from the speaker database (20) and to provide for a customized audio processing of the one or more speech signals (SI) in accordance with the corresponding priority parameter (P) of the associated one or more speaker IDs (21), and
- wherein the hearing device system (1), in particular the hearing device (2), is configured to adjust the priority parameters (P) in accordance with the method of any one of claims 1 to 16.
